# DEMANDE DE BREVET EUROPEEN

(11) **EP 1 688 028 A1**
(43) Date de publication de la demande: **09.08.2006**
(21) Numéro de dépôt: 05002344.9
(22) Date de dépôt: 04.02.2005
(51) Int. Cl.: A01D 25/04, A01D 25/02, A01D 33/08

(54) **Dispositif pour la récolte de racines pivotantes et machine agricole comprenant un tel dispositif**

(71) Demandeur: Degroote Alain, 6210 Villers-Perwin (BE)
(72) Inventeur: Degroote Alain, 6210 Villers-Perwin (BE)

(57) **Abrégé**

Dispositif pour la récolte de racines pivotantes, comprenant une paire de barreaux (10, 11), qui sont disposés à l'arrière d'un organe d'arrachage (2, 3) des racines et qui sont couplés à un oscillateur mécanique (12), l'écartement entre les barreaux étant intermédiaire entre le diamètre du collet des racines et le diamètre de la zone subterminale desdites racines.

## Description

### Domaine de l'invention

L'invention se rapporte à la récolte des racines pivotantes, telles que les chicorées et les betteraves, par exemple.

Elle concerne plus particulièrement un dispositif pour la récolte de telles racines sur un champ de culture, ainsi qu'une machine agricole équipée d'un tel dispositif.

### Etat de la technique

Dans les champs de culture de plantes à racines pivotantes (chicorées, betteraves sucrières ou betteraves fourragères, par exemple), les plantes sont généralement disposées en rang. La récolte de ces racines pivotantes comprend l'arrachage des racines, les unes à la suite des autres sur chaque rang et leur transfert dans un bac ou un engin collecteur. L'arrachage des racines est habituellement précédé d'un décolletage des racines et de l'évacuation de leur feuillage. Il est normalement effectué au moyen d'une machine agricole qui circule sur le champ, parallèlement aux rangsde plantes, et qui est équipée de plusieurs dispositifs d'arrachage adéquats, disposés respectivement dans l'alignement de plusieurs rangs adjacents de plantes.

Il existe diverses techniques pour l'arrachage d'un rang de racines pivotantes. Une première technique fait usage d'une paire de disques à arête vive, convergeant du haut vers le bas et de l'avant vers l'arrière, qui sont partiellement enfouis dans le sol, de part et d'autre du rang de racines et qui, en tournant pendant la progression de la machine, extraient les racines du sol (US-A 1 462 948). Une autre technique utilise une paire de socs convergeant de l'avant vers l'arrière, qui sont partiellement enfouis dans le sol, de part et d'autre du rang de racines et qui, en avançant avec la machine agricole, extraient les racines du sol (US-A 1 530 497).

Ces techniques connues présentent l'inconvénient de laisser des mottes de terre adhérer aux racines arrachées. Par ailleurs, elles provoquent un bris substantiel des racines.

### Résumé de l'invention

L'invention vise à remédier à la déficience des machines agricoles connues décrites plus haut.

L'invention a dès lors pour objectif de fournir un dispositif pour l'arrachage de racines pivotantes d'un champ de culture, qui élimine, de manière efficace, les mottes de terre adhérant aux racines arrachées.

Un autre objectif de l'invention est de fournir un dispositif d'arrachage de racines pivotantes d'un champ de culture, qui réalise une évacuation efficace et régulière des racines arrachées, sans provoquer de bris.

Un objectif supplémentaire de l'invention consiste à fournir un organe d'arrachage perfectionné, permettant d'améliorer l'efficacité et la productivité des machines agricoles.

L'invention a aussi pour objectif de fournir une machine agricole de conception nouvelle, pour la récolte de racines pivotantes.

En conséquence, l'invention concerne un dispositif pour la récolte de racines pivotantes, comprenant un organe d'arrachage des racines, ledit dispositif se caractérisant en ce qu'il comprend au moins une paire de barreaux, qui sont disposés à l'arrière de l'organe d'arrachage et qui sont couplés à un oscillateur mécanique, l'écartement entre les barreaux étant intermédiaire entre le diamètre du collet des racines et le diamètre de la zone subterminale desdites racines.

Le dispositif selon l'invention s'applique à la récolte de racines pivotantes sur un champ de culture. Les racines pivotantes sont bien connues en soi et comprennent pour l'essentiel, un collet qui se situe au voisinage de la surface du sol et une zone subterminale qui est située sous le collet. La zone subterminale a un profil sensiblement conique et forme la partie souterraine de la racine. Le salsifis, la carotte, la chicorée, la betterave sucrière et la betterave fourragère constituent quelques exemples de racines pivotantes auxquelles l'invention s'applique. L'invention n'est toutefois pas limitée à ces seuls exemples de racines pivotantes.

Le dispositif selon l'invention est destiné à être monté sur une machine agricole et à être déplacé, avec celle-ci, le long d'un rang de racines d'un champ de culture pour les arracher et les récolter. Il comprend à cet effet un organe d'arrachage des racines. L'organe d'arrachage a pour fonction d'extraire les racines pivotantes enfouies dans le sol. Cette extraction est habituellement opérée dans le sens sensiblement vertical. L'organe d'arrachage du dispositif selon l'invention n'est pas critique pour la définition de l'invention. Il peut être tout organe d'arrachage communément utilisé pour l'arrachage des racines pivotantes. D'une manière générale, l'organe d'arrachage le plus adéquat va dépendre du type de racines pivotantes à récolter. On préfère, selon l'invention, utiliser un organe d'arrachage comprenant une paire de lames qui convergent de l'avant vers l'arrière et du haut vers le bas.
Dans la définition qui précède et dans la suite du présent mémoire, les vocables « avant », « arrière », « haut » et « bas » sont définis par rapport à la position et au sens du déplacement du dispositif, lorsque celui-ci est monté sur une machine agricole en action sur un champ de culture. L'expression « en action sur un champ de culture » signifie que la machine agricole est utilisée normalement sur un champ de culture de plantes à racines pivotantes, pour en récolter les racines pivotantes. Lors de l'utilisation d'un tel dispositif, les deux lames sont disposées symétriquement de chaque côté d'un rang de racines pivotantes à arracher et elles sont enfouies au moins partiellement dans le sol. Sous l'action du déplacement de la machine, les racines pivotantes sont saisies entre les deux lames, soulevées par celles-ci et repoussées vers l'arrière.

Selon l'invention, le dispositif comprend au moins une paire de barreaux, qui sont disposés à l'arrière de l'organe d'arrachage (le vocable « arrière » ayant la définition fournie plus haut). La disposition des barreaux est normalement agencée de manière que, pendant l'utilisation du dispositif selon l'invention sur une machine agricole, ils occupent respectivement des positions sensiblement symétriques par rapport au sens d'avancement de la machine agricole et soient inclinés vers l'arrière.
Les barreaux sont écartés l'un de l'autre d'une distance qui est intermédiaire entre le diamètre du collet des racines et le diamètre de leur zone subterminale. Dans le présent mémoire, le diamètre du collet d'une racine pivotante désigne le diamètre d'un cercle dont le périmètre est sensiblement égal au périmètre maximum du collet. Le diamètre de la zone subterminale est le diamètre d'un cercle dont le périmètre est sensiblement égal au périmètre de la zone subterminale, mesuré dans un plan transversal à l'axe de la racine, situé sous le collet, habituellement dans la moitié supérieure de la racine pivotante, de préférence dans le tiers central de la racine. Par ailleurs, les racines qui sont prises en considération pour définir le diamètre du collet et le diamètre de la zone subterminale sont des racines de plantes parvenues à maturité pour être récoltées. L'écartement optimum entre les deux barreaux dépend du type de racines récoltées. En pratique, il s'agit de diamètres moyens d'un échantillon représentatif de racines.
Les barreaux peuvent être rectilignes, cintrés ou posséder tout autre profil compatible avec leur fonction, qui va être définie plus loin. Ils peuvent être parallèles ou non, les conditions énoncées plus haut concernant leur écartement devant toutefois être respectées sur toute leur longueur. L'expression « sur toute leur longueur » désigne la partie des barreaux, qui exerce effectivement la fonction qui va être énoncée ci-dessous. On préfère que les deux barreaux soient rectilignes et parallèles.
La paire de barreaux a pour fonction de recueillir les racines pivotantes qui ont été arrachées par l'organe d'arrachage et d'assurer leur transfert vers l'arrière, où elles tombent sur le sol ou dans un engin collecteur situé derrière eux. A cet effet, pendant l'utilisation du dispositif selon l'invention avec une machine agricole sur un champ de culture, les racines qui sont successivement extirpées du sol par l'organe d'arrachage, sont refoulées l'une derrière l'autre sur la paire de barreaux, où elles pendent en étant repoussées progressivement jusqu'à l'extrémité postérieure desdits barreaux.

Dans le dispositif selon l'invention, les barreaux précités sont couplés à un oscillateur mécanique. L'oscillateur mécanique a pour fonction de soumettre la paire de barreaux à des oscillations ou vibrations mécaniques. Pendant l'exploitation du dispositif selon l'invention sur une machine agricole, les racines pivotantes supportées sur la paire de barreaux sont ainsi soumises à un ballottement qui a pour effet d'en détacher les mottes de terre qui y adhèrent éventuellement. Bien qu'a priori le sens des oscillations ne soit pas critique, on préfère, selon une forme de réalisation particulière de l'invention, que les barreaux soient soumis à des oscillations qui sont situées dans le plan desdits barreaux. Dans cette forme de réalisation de l'invention, on préfère que l'amplitude des vibrations soit sensiblement nulle dans la direction transversale audit plan des barreaux.
L'amplitude des vibrations et leur fréquence doivent être réglées pour détacher les mottes de terre adhérant aux racines, sans détériorer celles-ci. Ces deux paramètres vont dépendre de divers facteurs, notamment des racines pivotantes récoltées, de la nature du terrain duquel on les extrait et du taux d'humidité de la terre. Ils doivent être déterminés dans chaque cas particulier par un homme du métier.
Nonobstant les conditions énoncées plus haut concernant les vibrations, l'oscillateur mécanique n'est pas critique pour la définition de l'invention. Un oscillateur mécanique convenant bien dans le dispositif selon l'invention comprend un système bielle-manivelle, entraîné par un moteur. Dans ce mode de réalisation de l'invention, le moteur peut être indifféremment un moteur électrique, un moteur à combustion interne, un moteur pneumatique ou un moteur hydraulique. En variante, le système bielle-manivelle peut être conçu pour être couplé au moteur de la machine agricole, au moyen d'un organe de transmission adéquat tel qu'une chaîne, une courroie ou un assemblage d'arbres et de pignons.

Dans une forme de réalisation avantageuse du dispositif selon l'invention, l'oscillateur est agencé en sorte de soumettre la paire de barreaux à des vibrations dont l'amplitude croît depuis l'extrémité desdits barreaux, qui est située au voisinage de l'organe d'arrachage vers l'autre extrémité desdits barreaux. Cette forme de réalisation de l'invention facilite le transfert des racines pivotantes de l'organe d'arrachage sur la paire de barreaux. Dans cette forme de réalisation du dispositif selon l'invention, on préfère que l'amplitude des vibrations soient sensiblement nulle à l'extrémité de la paire de barreaux, qui est située au voisinage immédiat de l'organe d'arrachage.

Dans une autre forme de réalisation avantageuse du dispositif selon l'invention, celui-ci comprend en outre un moyen de retenue des racines, en amont de la paire de barreaux (le vocable « amont » étant défini par rapport au sens d'avancement du dispositif pendant son utilisation normale sur un champ de culture).
Dans cette forme de réalisation, le moyen de retenue est conçu pour exercer une double fonction technique. D'une part, il limite l'amplitude du ballottement des racines sur les barreaux de manière à réduire le risque que celles-ci se brisent ; d'autre part, il soumet les racines, à chaque ballottement, à un choc qui favorise la séparation des mottes de terre adhérant auxdites racines.
Dans cette forme de réalisation de l'invention, le moyen de retenue des racines comprend avantageusement au moins une paire de barres, disposées en amont de la paire de barreaux. Dans cette variante de l'invention, l'écartement entre les deux barres (ou tout autre moyen adéquat) doit être supérieur au diamètre du collet des racines et adapté pour réaliser la double fonction technique définie plus haut.

Dans une forme de réalisation préférée du dispositif selon l'invention, l'organe d'arrachage comprend, comme exposé plus haut, une paire de lames qui convergent vers l'arrière et les deux barreaux sont fixés respectivement à l'extrémité postérieure des deux lames. La disposition des deux barreaux est en outre agencée de telle sorte que les deux lames et les deux barreaux aient un plan médian commun. Dans cette forme de réalisation du dispositif selon l'invention, l'oscillateur est conçu pour soumettre les lames et les barreaux à des oscillations autour d'un axe qui est situé dans le plan médian susdit et qui passe entre les extrémités postérieures desdites lames et au-dessus de leur extrémité antérieure.
Cette forme de réalisation préférée de l'invention présente un double avantage : d'une part, les lames sont soumises à des vibrations, ce qui facilite l'extraction des racines du sol en diminuant le risque de les endommager ou de les briser ; d'autre part, l'amplitude des oscillations est sensiblement nulle à la jonction des lames et des barreaux, ce qui facilite le transfert des racines sur les barreaux. L'absence substantielle d'oscillations ou de vibrations à la jonction des lames et des barreaux présente l'avantage supplémentaire d'éviter un bris des racines.
Sur les barreaux, les racines sont soumises à des vibrations dont l'amplitude va en croissant au fur et à mesure qu'elles progressent vers l'arrière du dispositif. Sous l'action de ces vibrations, les mottes de terres adhérant aux racines, se détachent de celles-ci.

Dans la forme de réalisation préférée qui vient d'être décrite, le dispositif peut avantageusement comprendre un moyen de retenue des racines, comme exposé plus haut. Dans un mode de réalisation préféré de l'invention, le moyen de retenue comprend une paire de barres (ou tout autre moyen de retenue adéquat) qui sont fixées respectivement aux deux lames, en amont de la paire de barreaux.

Dans la forme de réalisation préférée de l'invention, décrite plus haut, les lames de l'organe d'arrachage constituent un élément important pour le fonctionnement du dispositif selon l'invention.
On a maintenant trouvé qu'en conférant un profil particulier auxdites lames, on améliorait considérablement l'efficacité et la productivité des organes d'arrachage des racines pivotantes.

En conséquence, l'invention concerne également un organe pour l'arrachage de racines pivotantes, comprenant une paire de lames sur un bâti, l'organe d'arrachage se caractérisant en ce que les lames présentent un profil gauche et comprennent chacune une partie antérieure et une partie postérieure, qui sont profilées de telle sorte que les parties postérieures respectives desdits lames convergent de l'avant vers l'arrière et du haut vers le bas et que les parties antérieures respectives desdites lames soient sensiblement parallèles ou convergent de l'avant vers l'arrière avec un angle de convergence inférieur à celui des parties postérieures susdites.
Dans la définition de l'organe d'arrachage selon l'invention et dans la suite du présent mémoire, les expressions « partie antérieure » et « partie postérieure » et les vocables « avant », « arrière », « haut » et « bas » sont définis par rapport à la position et au sens du déplacement de l'organe d'arrachage, lorsque celui-ci est monté sur une machine agricole en action sur un champ de culture (l'expression « en action sur un champ de culture » a été définie plus haut).

Dans l'organe d'arrachage selon l'invention, les deux lames possèdent de préférence un plan de symétrie qui, pendant une utilisation normale dudit organe d'arrachage sur un champ de culture, est sensiblement perpendiculaire au champ de culture.

Dans l'organe d'arrachage selon l'invention, la partie antérieure et la partie postérieure susdite de chaque lame sont normalement reliées le long d'une surface commune. Les parties postérieures respectives des lames convergent de l'avant vers l'arrière. Les parties antérieures respectives des deux lames peuvent être parallèles ou converger de leur extrémité avant vers leur extrémité arrière. Dans le cas où les parties antérieures des lames convergent de l'avant vers l'arrière, leur angle de convergence est inférieur à l'angle de convergence des parties postérieures.
Les parties postérieures respectives des deux lames convergent du haut vers le bas. Les parties antérieures peuvent éventuellement converger du haut vers le bas. On préfère que les parties antérieures des lames ne convergent pas vers le bas, ni vers le haut. On préfère tout spécialement que les parties antérieures respectives des deux lames soient situées dans des plans sensiblement parallèles, ceux-ci étant de préférence sensiblement perpendiculaires à la surface du champ de culture, pendant une utilisation normale de l'organe d'arrachage. L'écartement entre les parties antérieures des lames est supérieur au diamètre du collet des racines pivotantes à récolter. L'écartement entre les extrémités arrière des parties postérieures des lames est inférieur au diamètre du collet des racines. Il est de préférence intermédiaire entre le diamètre du collet des racines et le diamètre de leur zone subterminale. La position des lames sur le bâti de l'organe d'arrachage doit dès lors être adapté dans chaque cas particulier au type de racines pivotantes à récolter. De plus, pour une variété déterminée de racine, L'écartement optimum doit être déterminé et réglé par l'homme du métier, en fonction, notamment, des dimensions des lames et de leur position sur la machine agricole, ainsi que de la forme et de la taille moyenne des racines à récolter.

L'organe d'arrachage selon l'invention peut équiper tout type de machine agricole normalement conçue pour l'arrachage d'un champ de racines pivotantes. Conformément à une forme de réalisation particulière de l'invention, il équipe avantageusement un dispositif conforme à l'invention (défini plus haut) pour la récolte de racines pivotantes.

Le dispositif selon l'invention, défini plus haut, est destiné à être monté en un exemplaire ou en plusieurs exemplaires sur une machine agricole pour la récolte de racines pivotantes.

En conséquence, l'invention concerne également une machine agricole pour la récolte de racines pivotantes, comprenant, sur un châssis, au moins un dispositif de récolte conforme à l'invention, ledit dispositif étant disposé sur le châssis de telle sorte qu'en position de travail, les barreaux soient inclinés vers l'arrière, depuis leur extrémité antérieure vers leur extrémité postérieure.

La machine selon l'invention est destinée à la récolte de racines pivotantes plantées en rangs parallèles dans un champ de culture. Le châssis de la machine est normalement monté sur des roues, dont l'écartement est réglé pour qu'elles passent entre les rangs de racines pivotantes du champ. Le châssis de la machine porte au moins un dispositif conforme à l'invention pour la récolte de racines pivotantes, que l'on dispose dans l'alignement d'un rang de racines, pendant l'utilisation de la machine. Le châssis de la machine porte idéalement plusieurs dispositifs conformes à l'invention, qui sont alors disposés respectivement dans l'alignement de plusieurs rangs de racines pivotantes du champ. Le ou chaque dispositif de récolte conforme à l'invention est positionné sur le châssis de la machine de telle manière que, pendant l'utilisation de la machine sur un champ de culture, la paire de barreaux soient inclinés de bas en haut, depuis leur extrémité antérieure vers leur extrémité postérieure.

Le dispositif de récolte équipant la machine agricole selon l'invention comprend, comme exposé plus haut, un organe pour l'arrachage de racines pivotantes

Dans une forme de réalisation particulière de la machine agricole selon l'invention, cet organe d'arrachage comprend une paire de lames divergentes, qui sont disposées sur le châssis de telle sorte qu'en position de travail, elles présentent une arête tranchante qui est inclinée de haut en bas, depuis l'extrémité antérieure desdites lames vers leur extrémité arrière.

Dans une autre forme de réalisation particulière de la machine agricole selon l'invention, le ou chaque dispositif de récolte est articulé sur le châssis, de manière à pouvoir pivoter sur un axe sensiblement vertical. Ce mode de réalisation présente l'avantage que le dispositif de récolte est automatiquement maintenu dans l'alignement du rang de racines, au cas où la machine viendrait à s'écarter latéralement de sa trajectoire.

Pendant l'utilisation de la machine agricole selon l'invention sur un champ de culture de plants à racines pivotantes, les racines pivotantes sont arrachées successivement par l'organe d'arrachage, transférées sur la paire de barreaux et refoulées vers l'extrémité postérieure de ceux-ci.

Dans une forme de réalisation préférée de la machine agricole selon l'invention, un engin collecteur des racines pivotantes est disposé sous l'extrémité postérieure des barreaux. Dans cette forme de réalisation de la machine selon l'invention, l'engin collecteur peut être monté sur le châssis et par exemple comprendre un convoyeur à courroie ou un disque rotatif comme utilisé communément sur les machines agricoles.

Le dispositif de récolte, l'organe d'arrachage et la machine agricole selon l'invention conviennent pour la récolte de tous types de racines pivotantes, telles que des racines de salsifis, des carottes, des betteraves sucrières et des betteraves fourragères. L'invention trouve une application spécialement avantageuse pour la récolte de racines de chicorées.

### Brève description des figures

Des particularités et détails de l'invention vont apparaître au cours de la description suivante des figures annexées.
La figure 1 est une vue en perspective d'une forme de réalisation particulière du dispositif de récolte selon l'invention ;
La figure 2 est une autre vue en perspective du dispositif de la figure 1 ;
La figure 3 est une vue de face du dispositif des figures 1 et 2 ;
La figure 4 est une vue du dessus d'une forme de réalisation particulière de l'organe d'arrachage selon l'invention ; et
La figure 5 est une vue arrière de l'organe d'arrachage de la figure 4.

Les figures ne sont pas dessinées à l'échelle.

Généralement, les mêmes numéros de référence désignent les mêmes éléments.

### Description détaillée d'un mode de réalisation particulier

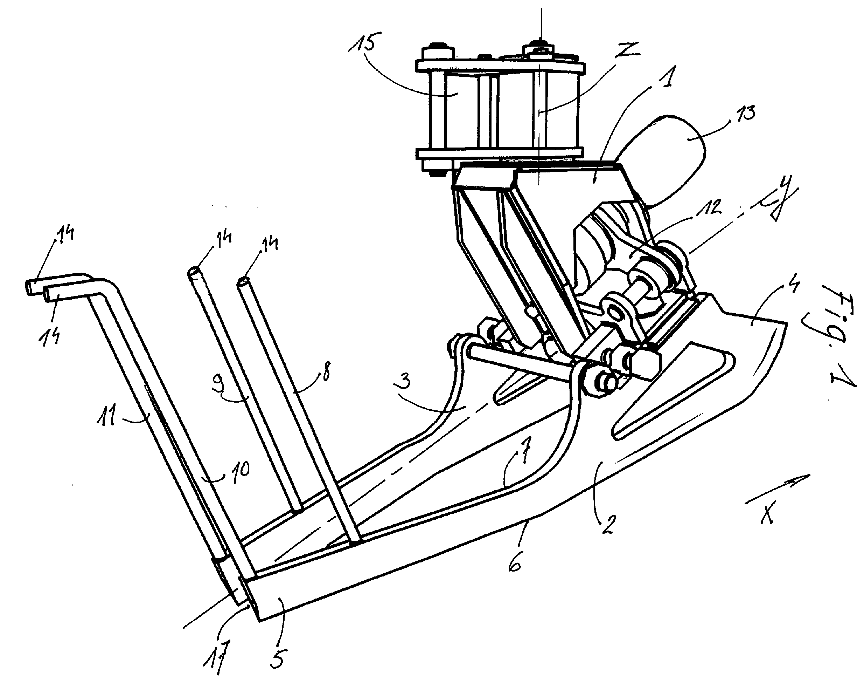

Le dispositif de récolte représenté aux figures 1 à 3 est spécialement destiné à l'arrachage des racines de chicorées. Les racines des chicorées sont des racines pivotantes, présentant un collet prolongé par une zone subterminale conique.

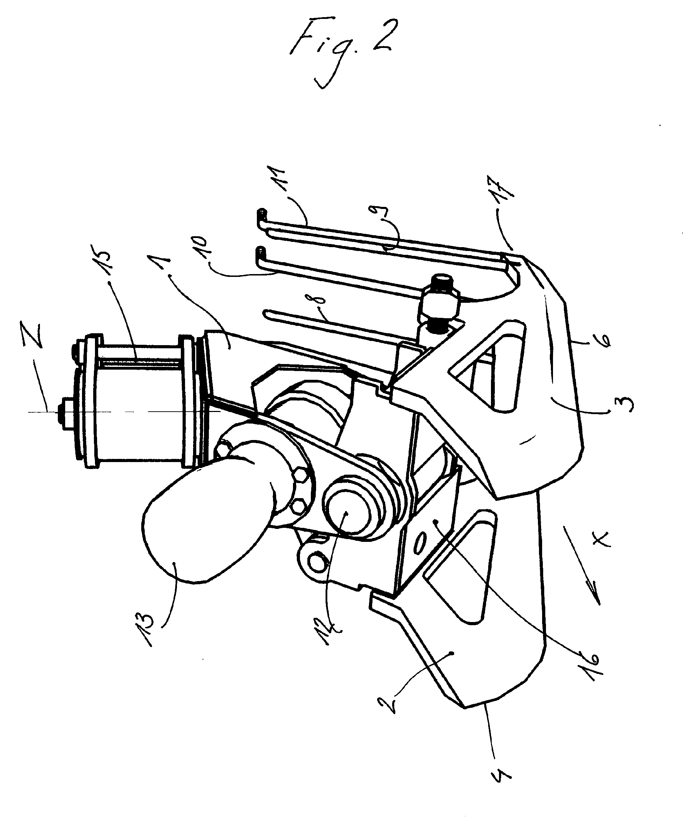

La figure 1 montre la partie latérale et la partie arrière du dispositif et la figure 2 montre la partie latérale et la partie avant du dispositif.

Le dispositif représenté aux figures 1 à 3 comprend un bâti 1 portant un organe pour l'arrachage des racines pivotantes. L'organe d'arrachage comprend une paire de lames 2 et 3 en acier, dont une arête 6 est tranchante. Le bâti 1 est destiné à être fixé au châssis d'une machine agricole, non représentée.

Lorsque le bâti 1 est fixé sur le châssis d'une machine agricole, les deux lames 2 et 3 occupent des positions sensiblement symétriques par rapport à un plan vertical passant par l'axe géométrique du sens de progression de la machine agricole (le sens de progression de la machine agricole pendant son utilisation sur un champ de culture étant représenté par la flèche X aux figures 1 et 2). (Dans la description des figures, la machine est supposée en position normale de travail sur une surface horizontale).

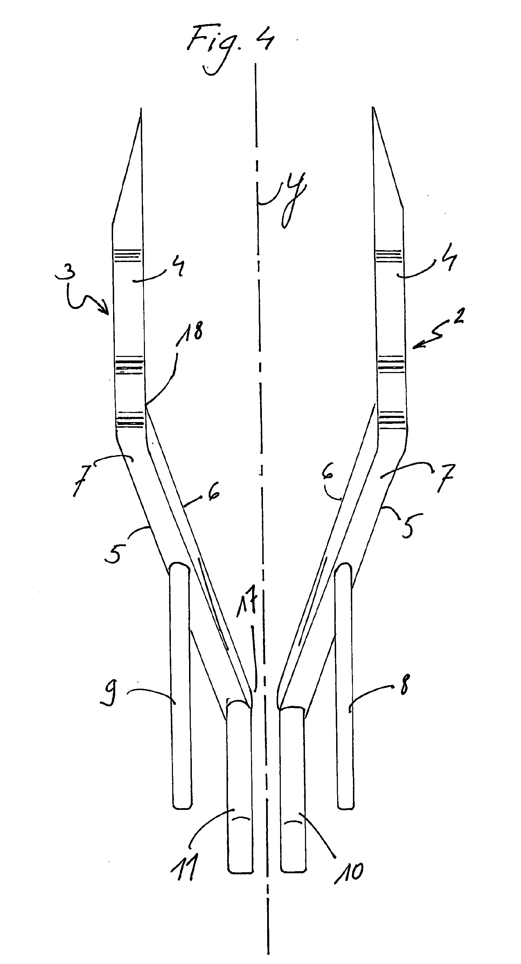

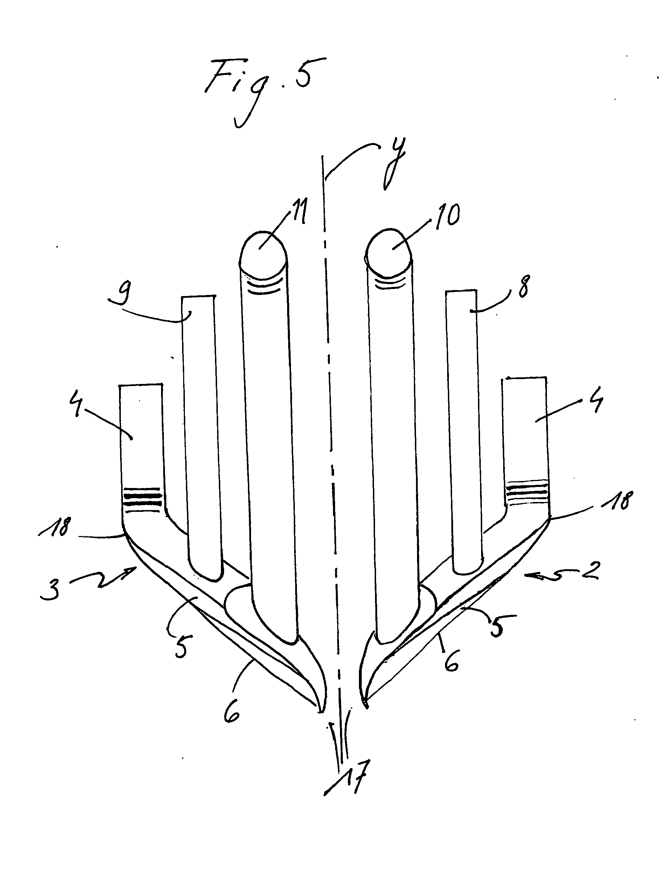

Les lames 2 et 3 sont représentées de manière détaillée aux figures 4 et 5. Selon l'invention, elles présentent un profil gauche et comprennent une partie antérieure 4 et une partie postérieure 5. Sur le bâti 1 les parties antérieures 4 des deux lames sont sensiblement planes et verticales et leurs parties postérieures 5 sont sensiblement planes et convergent de l'avant (18) vers l'arrière (17) et du haut (7) vers le bas (6). En variante, les parties postérieures 5 peuvent être cintrées de l'avant (18) vers l'arrière (17). L'écartement entre les parties antérieures 4 des lames est normalement supérieur au diamètre du collet des racines pivotantes à arracher, tandis que l'écartement entre les extrémités arrière 17 des parties postérieures 5 est intermédiaire entre le diamètre du collet des racines pivotantes et le diamètre de leur zone subterminale.

Conformément à l'invention, un barreau 10 est fixé au voisinage de l'extrémité arrière 17 de la lame 2 et un barreau similaire 11 est fixé près de l'extrémité arrière 17 de la lame 3. Les barreaux 10 et 11 sont sensiblement parallèles et ils sont symétriques par rapport au plan médian des lames 2 et 3. Deux barres 8 et 9 sont fixées aux deux lames 2 et 3, respectivement devant le barreau 10 et devant le barreau 11. Les barres 8 et 9 sont sensiblement parallèles aux barreaux 10 et 11. La fonction des barreaux 10 et 11 et des barres 8 et 9 sera explicitée plus loin.

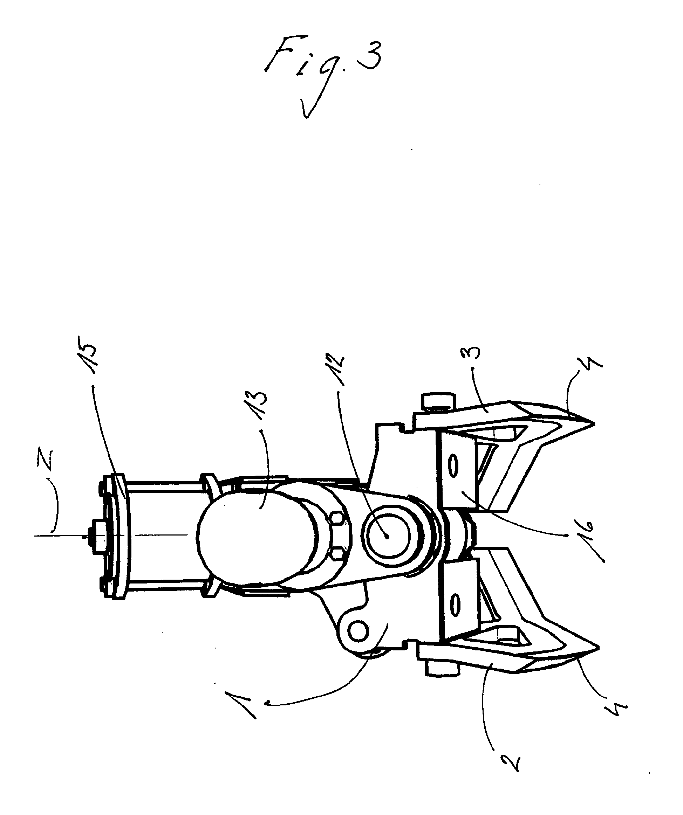

La fixation des lames 2 et 3 au bâti 1 est agencée de manière que ces lames puissent subir des vibrations sur le châssis 1. A cet effet, un système bielle-manivelle 12 est interposé entre le bâti 1 et une armature 16 (figures 2 et 3) portant les lames 1 et 2. Le système bielle-manivelle 12 est positionné au-dessus des lames 2 et 3 et orienté de manière que les vibrations susdites des lames 2 et 3 consistent en des oscillations autour d'un axe géométrique oblique Y, situé dans le plan médian des lames 2 et 3 et passant entre les extrémités postérieures 17 des lames et au-dessus de leur partie antérieure 4. De cette manière, pendant le fonctionnement du système bielle-manivelle 12, les lames 2 et 3 sont soumises à des oscillations dont l'amplitude va en diminuant depuis leur partie antérieure 4 vers leur extrémité arrière 17 où elle est sensiblement nulle. Simultanément, les barreaux 10 et 11 et les barres 8 et 9 sont soumises à des oscillations dont l'amplitude va en croissant depuis leur extrémité inférieure jusqu'à leur extrémité supérieure 14.
Le système bielle-manivelle 12 est couplé à un organe moteur 13. L'organe moteur 13 peut par exemple consister en un moteur électrique autonome. En variante, il peut comprendre un moteur pneumatique ou un moteur hydraulique, destiné à être relié à un circuit pneumatique (ou hydraulique) d'une machine agricole.

Pour récolter des racines de chicorées au moyen du dispositif représenté aux figures, on fixe le bâti 1 à une traverse d'une machine agricole au moyen d'une armature 15 et on positionne la machine agricole sur un champ de culture de manière que le plan médian des lames 2 et 3 se trouve dans l'alignement d'un rang de chicorées. On positionne le dispositif de récolte sur ladite traverse de la machine agricole de manière que l'arête tranchante 6 des lames 2 et 3 soit inclinée de haut en bas, depuis leur extrémité avant 4 vers leur extrémité arrière 17 et qu'elles soient partiellement enfouies dans le sol. Lorsque les lames 2 et 3 occupent cette position, les barreaux 10 et 11 et les barres 8 et 9 sont inclinés vers l'arrière. On déplace ensuite la machine agricole au-dessus du rang de chicorées (dont les feuilles ont au préalable été détachées et évacuées), dans le sens de la flèche X. Pendant le déplacement de la machine agricole, les parties antérieures 4 des lames 2 et 3 nettoient le sol des herbes éventuelles qui le jonchent et les racines des chicorées sont saisies entre les parties postérieures 5 des deux lames 2 et 3 et déterrées progressivement. Elles sont ensuite refoulées sur la paire de barreaux 10 et 11, où elles sont suspendues (du fait que l'écartement entre les barreaux 10 et 11 est inférieur au diamètre du collet des racines). Le collet des racines est intercalé entre les deux barres 8 et 9, dont la fonction sera explicitée plus loin. Au fur et à mesure que la machine agricole progresse sur le champ, les racines arrachées du sol s'accumulent l'une derrière l'autre sur les barreaux 10 et 11 en progressant vers l'extrémité postérieure 14 desdits barreaux, d'où elles tombent dans un bac récolteur ou sur un convoyeur approprié (par exemple une courroie transporteuse).

Pendant la récolte des racines, les lames 2 et 3, les barreaux 10 et 11 et les barres 8 et 9 sont soumis aux oscillations générées par le système bielle-manivelle 12. Les oscillations des lames 2 et 3 ont pour effet de déliter les racines dans le sol, ce qui facilite leur extraction du sol et réduit le risque de les détériorer. Les oscillations des barreaux 10 et 11 soumettent les racines qui s'y trouvent suspendues à des vibrations. Sous l'effet des vibrations, les racines ballottent sur les barreaux. Les barres 8 et 9 limitent l'amplitude du ballottement des racines qui subissent en outre des chocs mécaniques à leur contact. Ce ballottement et ces chocs ont pour effet de détacher les mottes de terre adhérant aux racines.

Dans une variante de réalisation avantageuse du dispositif représenté aux figures, le bâti 1 est fixé à l'armature 15 de manière à pouvoir pivoter autour d'un axé vertical Z. Grâce à cet agencement particulier, lorsque la machine agricole s'écarte légèrement de sa trajectoire le long du rang de racines à récolter, le bâti 1 pivote sur l'armature 15 pour maintenir les lames 2 et 3 dans l'alignement du rang de racines.

## Revendications

1. Dispositif pour la récolte de racines pivotantes, comprenant un organe d'arrachage des racines, **caractérisé en ce qu'**il comprend au moins une paire de barreaux (10, 11), qui sont disposés à l'arrière de l'organe d'arrachage (2, 3) et qui sont couplés à un oscillateur mécanique (12), l'écartement entre les barreaux (10, 11) étant intermédiaire entre le diamètre du collet des racines et le diamètre de la zone subterminale desdites racines.

2. Dispositif selon la revendication 1, **caractérisé en ce que** l'oscillateur (12) est agencé en sorte de soumettre la paire de barreaux (10, 11) à des oscillations dont l'amplitude croît depuis l'extrémité desdits barreaux, qui est située au voisinage de l'organe d'arrachage (2, 3) vers l'autre extrémité (14) desdits barreaux.

3. Dispositif selon la revendication 2, **caractérisé en ce que** l'amplitude des oscillations est sensiblement nulle à l'extrémité des barreaux (10, 11), qui est située au voisinage de l'organe d'arrachage (2, 3).

4. Dispositif selon l'une quelconque des revendications 1 à 3, **caractérisé en ce qu'**il comprend un moyen de retenue des racines, en amont de la paire de barreaux (10, 11).

5. Dispositif selon la revendication 4, **caractérisé en ce que** le moyen de retenue des racines comprend au moins une paire de barres (8, 9).

6. Dispositif selon l'une quelconque des revendications 1 à 5, **caractérisé en ce que** l'organe d'arrachage comprend une paire de lames (2, 3) qui convergent vers l'arrière (17), **en ce que** les deux barreaux (10, 11) sont fixés respectivement à l'extrémité arrière (17) des deux lames (2, 3), de telle sorte que les deux lames et les deux barreaux aient un plan médian commun et **en ce que** l'oscillateur (12) est conçu pour soumettre lesdites lames et lesdits barreaux à des oscillations autour d'un axe (Y) qui est situé dans le plan médian susdit et qui passe sensiblement entre les extrémités arrière (17) desdites lames.

7. Organe pour l'arrachage de racines pivotantes, comprenant une paire de lames sur un bâti, **caractérisé en ce que** les lames (2, 3) présentent un profil gauche et comprennent chacune une partie antérieure (4) et une partie postérieure (5), qui sont profilées de telle sorte que les parties postérieures respectives (5) desdits lames convergent de l'avant vers l'arrière (17) et du haut (7) vers le bas (6) et que les parties antérieures respectives (4) desdits lames soient sensiblement parallèles ou convergent de l'avant vers l'arrière avec un angle de convergence inférieur à celui des parties postérieures (5).

8. Organe d'arrachage selon la revendication 7, **caractérisé en ce que** les deux lames (2, 3) présentent un plan de symétrie.

9. Organe selon la revendication 8, **caractérisé en ce que** les parties antérieures (4) des lames sont sensiblement parallèles au plan de symétrie.

10. Organe d'arrachage selon l'une quelconque des revendications 7 à 9, **caractérisé en ce qu'**il équipe un dispositif de récolte de racines pivotantes, conforme à l'une quelconque des revendications 1 à 6.

11. Machine agricole pour la récolte de racines pivotantes, comprenant, sur un châssis, au moins un dispositif conforme à l'une quelconque des revendications 1 à 6, ledit dispositif étant disposé sur le châssis de telle sorte qu'en position de travail, les barreaux (10, 11) soient inclinés vers l'arrière depuis leur extrémité antérieure vers leur extrémité postérieure (14).

12. Machine agricole selon la revendication 11, **caractérisé en ce que**, dans le cas où l'organe d'arrachage du dispositif comprend une paire de lames divergentes (2, 3), lesdites lames sont disposées sur le châssis de telle sorte qu'en position de travail, elles présentent une arête tranchante (6) qui est inclinée de haut en bas, depuis l'extrémité avant desdites lames vers leur extrémité arrière (17).

13. Machine agricole selon la revendication 11 ou 12, **caractérisée en ce que** l'organe d'arrachage est attaché au châssis au moyen d'une articulation présentant un axe de rotation sensiblement vertical.

14. Machine agricole selon l'une quelconque des revendications 11 à 13, **caractérisée en ce qu'**elle comprend un engin collecteur des racines pivotantes, sous l'extrémité postérieure (14) des barreaux.

## Revendications modifiées

### Revendications modifiées conformément à la règle 86(2) CBE.

**1.** Dispositif pour la récolte de racines pivotantes, comprenant, d'une part un organe d'arrachage des racines comprenant une paire de lames (2, 3) qui convergent de l'avant vers l'arrière (17) et du haut vers le bas et, d'autre part, un moyen pour recueillir les racines arrachées, **caractérisé en ce que** le moyen pour recueillir les racines arrachées comprend au moins une paire de barreaux (10, 11), qui sont disposés à l'arrière des lames (2, 3), qui sont inclinés vers l'arrière et qui sont couplés à un oscillateur mécanique (12) conçu pour soumettre la paire de barreaux à des vibrations mécaniques, l'écartement entre les barreaux (10, 11) étant intermédiaire entre le diamètre du collet des racines et le diamètre de la zone subterminale desdites racines.

**2.** Dispositif selon la revendications 1, **caractérisé en ce que** les deux barreaux (10, 11) sont fixés respectivement à l'extrémité arrière (17) des deux lames (2, 3), de telle sorte que les deux lames et les deux barreaux aient un plan médian commun et **en ce que** l'oscillateur (12) est conçu pour soumettre les lames et les barreaux à des oscillations autour d'un axe (Y) qui est situé dans le plan médian susdit et qui passe sensiblement entre les extrémités arrière (17) des lames.

**3.** Dispositif selon la revendication 1 ou 2, **caractérisé en ce que** l'oscillateur (12) est agencé en sorte de soumettre la paire de barreaux (10, 11) à des oscillations dont l'amplitude croît depuis l'extrémité desdits barreaux, qui est située au voisinage des lames (2, 3) vers l'autre extrémité (14) desdits barreaux.

**4.** Dispositif selon la revendication 3, **caractérisé en ce que** l'amplitude des oscillations est sensiblement nulle à l'extrémité des barreaux (10, 11), qui est située au voisinage des lames (2, 3).

**5.** Dispositif selon l'une quelconque des revendications 1 à 4, **caractérisé en ce qu'**il comprend un moyen de retenue des racines, en amont de la paire de barreaux (10, 11).

**6.** Dispositif selon la revendication 5, **caractérisé en ce que** le moyen de retenue des racines comprend au moins une paire de barres (8, 9).

**7.** Organe pour l'arrachage de racines pivotantes, comprenant une paire de lames (2, 3) sur un bâti, lesdites lames présentant un profil gauche et comprenant chacune une partie antérieure (4) et une partie postérieure (5), les parties postérieures respectives (5) desdits lames convergeant de l'avant vers l'arrière (17) et du haut (7) vers le bas (6), **caractérisé en ce que** les parties antérieures respectives (4) desdits lames sont sensiblement parallèles.

**8.** Organe d'arrachage selon la revendication 7, **caractérisé en ce que** les deux lames (2, 3) présentent un plan de symétrie.

**9.** Organe d'arrachage selon la revendications 7 ou 8, **caractérisé en ce qu'**il équipe un dispositif de récolte de racines pivotantes, conforme à l'une quelconque des revendications 1 à 6.

**10.** Machine agricole pour la récolte de racines pivotantes, comprenant, sur un châssis, au moins un dispositif conforme à l'une quelconque des revendications 1 à 6, ledit dispositif étant disposé sur le châssis de telle sorte qu'en position de travail, les barreaux (10, 11) soient inclinés vers l'arrière depuis leur extrémité antérieure vers leur extrémité postérieure (14).

**11.** Machine agricole selon la revendication 10, **caractérisé en ce que** les lames (2, 3) sont disposées sur le châssis de telle sorte qu'en position de travail, elles présentent une arête tranchante (6) qui est inclinée de haut en bas, depuis l'extrémité avant desdites lames vers leur extrémité arrière (17).

**12.** Machine agricole selon la revendication 10 ou 11, **caractérisée en ce que** l'organe d'arrachage est attaché au châssis au moyen d'une articulation présentant un axe de rotation sensiblement vertical.

**13.** Machine agricole selon l'une quelconque des revendications 10 à 12, **caractérisée en ce qu'**elle comprend un engin collecteur des racines pivotantes, sous l'extrémité postérieure (14) des barreaux.
